Europäisches Patentamt

European Patent Office

Office européen des brevets

(11) Publication number: **0 267 217**
**B1**

(12) **EUROPEAN PATENT SPECIFICATION**

(45) Date of publication of patent specification: **13.06.90**

(21) Application number: **87902616.9**

(22) Date of filing: **21.04.87**

(86) International application number:
**PCT/GB87/00261**

(87) International publication number:
**WO 87/06667 05.11.87 Gazette 87/24**

(51) Int. Cl.⁵: **F 16 F 15/18**

(54) **TORSIONAL VIBRATION DAMPER.**

(30) Priority: **25.04.86 GB 8610209**

(43) Date of publication of application:
**18.05.88 Bulletin 88/20**

(45) Publication of the grant of the patent:
**13.06.90 Bulletin 90/24**

(84) Designated Contracting States:
**GB**

(56) References cited:
**DE-A-2 341 850**
**DE-A-3 322 374**
**US-A-2 635 483**
**US-A-4 200 003**

**Patent Abstracts of Japan, volume 5, no. 25 (M-55) (697), 14 February 1981**

(73) Proprietor: **AUTOMOTIVE PRODUCTS PLC**
**Tachbrook Road**
**Leamington Spa Warwickshire CV31 3ER (GB)**

(72) Inventor: **BAINBRIDGE, Wilfred, Nicholas**
**Staddle Stones Overthorpe**
**Banbury Oxfordshire OX17 3AF (GB)**

(74) Representative: **Cundy, Anthony Brian**
**Anthony Cundy & Company 384 Station Road**
**Dorridge**
**Solihull West Midlands B93 8ES (GB)**

Courier Press, Leamington Spa, England.

## Description

The invention relates to torsional vibration dampers. The invention is concerned particularly but not exclusively with torsional vibration dampers for use in conjunction with internal combustion engines. Such torsional vibration dampers are frequently incorporated in the driven plates of friction clutches through which drive is transmitted from the engine but they may be installed in other arrangements.

There is an increasing tendency to solve various drive line vibration problems with torsional vibration dampers. Such torsional vibration dampers are generally made from a number of components which are all movable relative to each other and which are subject to wear and deterioration, particularly under the arduous conditions associated with friction clutches.

A typical torsional vibration damper comprises first and second rotatable members coupled together and movable angularly with respect to each other about a common axis of rotation and friction damping means operative between the two members to provide damping of the relative angular movement between the members. Friction damping is normally employed due to its ease of implementation but other forms of damping such as viscous fluid damping can be employed.

Normally, a torsional vibration damper also incorporates resilient means operative between the members to provide further control over relative angular movement therebetween but such resilient means is not absolutely fundamental to all kinds of torsional vibration damper.

A further problem associated with some automobiles is that during the periods when the transmission drive is under no load, rotary oscillations occur in the gearbox producing a phenomenon known as idle-rattle.

In order to damp out the vibrations which generate idle-rattle it is known to utilise a friction clutch driven plate in which the torque load through the driven plate passes through two sets of damping springs arranged in series with each other. Very light loads applied to the driven plate are taken through soft auxiliary vibration damping springing. When the limited angular movement controlled by the auxiliary damping springing has been taken up, normal drive load passes through a set of main torsion damping springs. In this way, very light damping is provided over a limited range of movement for very light loads and this arrangement tends to prevent idle-rattle. Such a driven plate is known from French Patent Publication. No. 1 501 465.

Viscous damping is attractive in many situations where primary and/or auxiliary vibration dampers are employed due to its velocity dependent degree of damping. However, containment of a suitable viscous fluid normally requires complex seals which must remain effective in a possibly hostile environment for a long period of time with the result that there are many applications where in the past viscous damping has been impractical.

Magnetic damping is also known from US-A-4 200 003 which describes a rotary viscous damper that uses a magnetic fluid as the damping medium. The damper comprises an annular permanent magnetic rotor enclosed in a magnetically permeable housing having an annular cavity. The magnetic fluid fills the space between the rotor and the housing and is held in place by magnetic forces generated by the magnetic rotor. Because the hub of the damper is made from a non-magnetic material there is little or no magnetic field in the area adjacent to the surfaces of the hub and the magnetic field is concentrated in the area adjacent to the annular magnet.

It is an object of the present invention to provide an improved viscous torsional vibration damper.

In accordance with one aspect of the present invention there is provided a torsional vibration damper comprising first and second rotatable members coupled together and movable angularly with respect to each other about a common axis of rotation, a magnetic circuit passing through both members and comprising a gap between the members across which a magnetic field is established, and a viscous magnetic fluid held in the gap by the magnetic field and providing viscous damping of relative angular movement between the members, wherein one of the first and second rotatable members is provided with a plurality of castellations protruding from one face thereof at regular intervals around the periphery of the member and extending towards the other of the first and second members, and the other of the first and second members is provided with a plurality of raised ribs extending towards said one member, the raised ribs extending in the circumferential direction of the second member, the relative angular positions of the castellations and of the ribs being such that during relative movement between the first and second members which is to be damped, the degree of overlap of the castellations and the ribs varies.

The raised ribs may be arranged as radially outer ribs and radially inner ribs.

According to another aspect of the present invention there is provided a clutch driven plate comprising a hub, a friction facing carrier mounted on the hub coaxially therewith and capable of limited angular rotation about the hub, and a torsional vibration damper as defined hereinabove acting between the hub and the friction facing carrier.

According to a further aspect of the present invention there is provided a clutch driven plate comprising a hub incorporating an inner flange, an outer flange mounted on the inner flange coaxially therewith and capable of limited angular rotation about the hub, a friction facing carrier mounted on the hub coaxially therewith and capable of limited angular rotation relative to the hub and to the outer flange, and a torsional vibration damper as defined hereinabove acting between the outer flange and the hub.

For a better understanding of the present invention and to show more clearly how it may be carried into effect reference will now be made, by way of example, to the accompanying drawings in which:

Figure 1 is a diagrammatic cross-sectional view through a friction clutch driven plate incorporating a torsional vibration damper;

Figure 2 is a corresponding view of part of the driven plate on a larger scale showing further details of the damper;

Figures 3 to 5 together show details of a torsional vibration damper according to the present invention; and

Figure 6 is a diagrammatic cross-sectional view through a friction clutch driven plate incorporating a torsional vibration damper in the form of an idle-rattle damper.

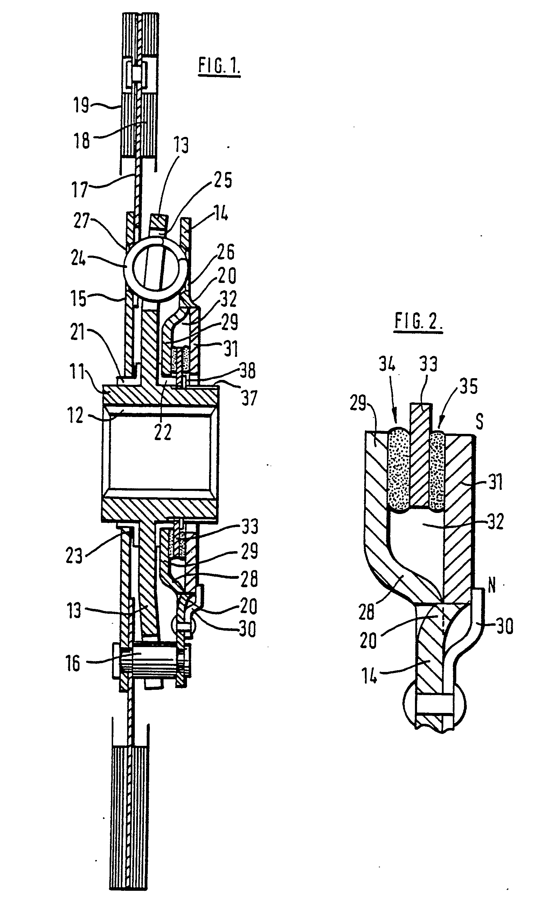

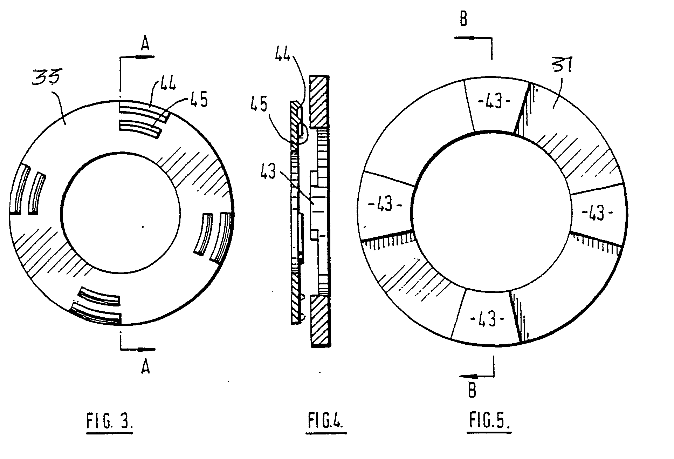

The driven plate shown in Figure 1 incorporates an annular hub 11 having internal splines 12 intended for engagement with a splined input shaft to a gearbox. Hub 11 incorporates an integral radial flange 13.

A friction facing carrier is constituted by two side plates 14 and 15 arranged one to each side of the flange 13 and held together by stop pin rivets 16 which unite the side plates together with clearance therebetween for the flange 13. The friction facing carrier also carries a series of spring steel segments 17 around the outer periphery of the side plate 14 and these segments in turn carry two friction facings 18 and 19.

The hub 11 with its flange 13 and the friction facing carrier with its friction facings constitute first and second rotatable members coupled together and movable angularly with respect to each other about a common axis of rotation. Low friction bearing elements 21 and 22 themselves provide relative radial location between the two members. In conjunction with axially directed spring loading provided by a belville spring 23, the bearing elements 21 and 22 also provide relative axial location between the members.

Circumferentially directed resilient elements constituted by coil springs 24 are arranged in mutually aligned apertures in the flange and side plates, namely apertures 25 in the flange and apertures 26 and 27 in side plates 14 and 15 respectively.

Side plate 14 incorporates an inward annular step 28 near its inner periphery providing an inwardly directed annular element 29. The side plate 14 and in particular element 29 is of a magnetic material such as mild steel. An annular magnet 31 is secured by half sheared lugs 20 and clips 30 to the side plate 14 in such a position that it forms a second inwardly directed annular element spaced from the element 29 and also forms an inwardly directed annular groove 32 between the elements 29 and 31. An outwardly directed annular element 33 is carried by the hub 11 for rotation therewith and extends outward between the two elements 29 and 31 with gaps 34 and 35 between adjacent elements. For assembly purposes, element 33 must of course be positioned between elements 29 and 31 before they are secured together. Also, to enable the side plate 14 to be mounted on the hub after elements 29 and 31 have been joined together, element 33 is arranged to be splined to the hub 11 on splines 37. It is located axially against an end face of the bearing element 22 and held in position by a circlip 38. Element 33 is also of ferromagnetic material.

A magnetic fluid is introduced into the gaps 34 and 35 in such quantities as to bridge the gaps substantially as shown. The fluid is held in position by magnetic fields in the gaps arising from the magnet 31 and its associated magnetic circuit including shoulder 28, element 29, gap 34, element 33 and gap 35. The magnet or element 31 is magnetised radially as indicated by references N and S to provide magnetic flux around this circuit and magnetic fields across the gaps.

In use, torque from an internal combustion engine is transmitted through the friction facings 18 and 19 to the carrier and from the carrier to the hub 11 with its flange 13. The main driving torque is transmitted through the resilient elements 24, deflecting these elements and causing relative angular displacement between the carrier and hub. Spring lengths and aperture lengths may be such that some springs come into effect immediately while others come into effect only after some movement. Torsional vibrations associated with the engine and its transmission of power result in vibratory angular displacement between the carrier and the hub. Shear action in the magnetic fluid in gaps 34 and 35 provides viscous damping between the carrier and the hub and thereby tends to damp out the vibratory angular displacement between these two members.

The degree of damping provided by the magnetic fluid can be varied to meet requirements by the characteristics of the fluid, by the strength of the magnet and by the width and other dimensions of the gaps. The magnetic fluid may be, for example, a colloidal suspension of ferrite in any suitable base liquid that has a low vapour pressure and therefore does not evaporate. Suitable liquids include mineral oils and silicone-based oils. The viscous nature of the fluid itself can be varied by selecting a base liquid of suitable viscosity and by selecting the quantity and nature of the magnetic particles suspended in the base liquid. The width of the gaps between the annular element 33 and the magnet element 31 and annular element 29 are preferably in the range up to 0.5 mm, for example 0.25 mm, but can be varied as mentioned above to provide the required degree of damping.

The torsional vibration damper as shown and incorporated in a friction clutch driven plate is in a typical application rotated at speed of up to 7000 rpm. The substantial centrifugal force may be sufficient in some cases to throw the magnetic fluid outward away from the gaps 34 and 35. With a suitable magnetic circuit and the inwardly directed annular groove 32 confining the magnetic fluid, the arrangement may be such that the fluid is retained near to the gaps 34 and 35 and is returned to them by magnetic attraction as the rotational speed decreases. An alternative arrangement is to fill or substantially fill the free part of the annular groove 32 outward of the element 33 with a non-magnetic material. If the non-magnetic material is a relatively highly viscous material, the element 33 may extend radially outwardly into the non-magnetic material to provide increased damping. The fact that the magnetic fluid may bear against the non-magnetic material can also influence the degree of damping in such a manner that it varies with rotational speed. Of course, if the magnetic fluid is thrown out beyond the gaps 34 and 35 by centrifugal force, the degree of damping again varies with rotational speed.

Figures 3, 4 and 5 taken together show details of the element 33 and magnet 31. Figure 3 shows the annular element 33 in elevation and Figure 5 shows the magnet 31 in elevation. Figures 3 and 5 show the faces of these components which in practice are positioned adjacent each other as shown in Figure 4, which shows both elements in cross section, taken on lines A-A and B-B of Figures 3 and 5 respectively. The viscous magnetic fluid is not shown in Figure 4.

The magnet 31 shown in Figure 5 is generally annular and incorporates four castellations 43 projecting from one face at regular intervals around its periphery. The castellations act as magnetic pole pieces, tending to concentrate magnetic field in their vicinity.

The annular element 33 carries on its face directed towards the magnet a series of raised ribs. There is an outer rib 44 and an inner rib 45 at each of four angular positions around the annular element. These ribs project towards the magnet 31.

The relative angular positions between the castellations 43 on the one hand and the ribs 44 and 45 on the other hand is such that during relative movement which is to be damped out, the degree of overlap varies. The result of this is a variation in the strength of the magnetic field and thus of the degree of damping dependent on the relative angular position of the members. The relative positions of the castellations 43 and of the ribs 44 and 45 may be varied to suit the required variations in damping with angular movement. For example, it might be desirable to provide a central region of relative movement with very little damping and an increasing degree of damping with increasing angular movement.

In a modification ribs such as 44 and 45 may also be provided on the opposite face of the annular member 33 and there may also be further castellations with which these ribs co-operate.

Although it is not shown in the drawings and is not needed in all embodiments of the invention, we have found that it may be desirable in some instances to provide means for centering the intermediate element 33 between the rotatable members. The centering may be accomplished by suitable resilient biasing of the intermediate element or the rotatable members.

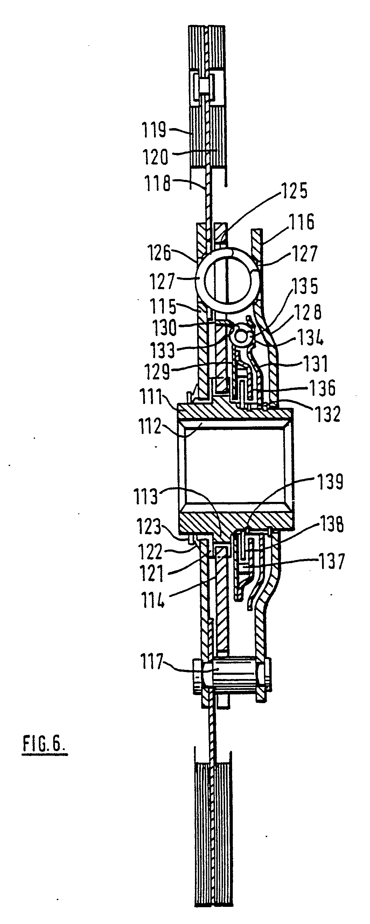

In the driven plate shown in Figures 1 to 5, there are only two relatively rotatable members but in some driven plates there are three relatively rotatable members with relatively stiff main damping between one pair and relatively flexible damping between another pair. In such a case, viscous damping with magnetic fluid as described above may be used in either or both of these situations. For example Figure 6 shows a driven plate with viscous damping with magnetic fluid providing relatively flexible damping for suppressing idle-rattle.

The driven plate shown in Figure 6 incorporates an annular hub 111 having internal splines 112 intended for engagement with a splined input shaft to a gearbox. Hub 111 incorporates an integral inner flange 113 which is provided with radially outwardly protruding teeth. An outer flange 114 is mounted on inner flange 113 by means of radially inwardly protruding teeth which permit angular movement of up to about 6° between the flanges 113, 114.

A friction facing carrier is constituted by two side plates 115 and 116 arranged one to each side of the outer flange 114 and held together by stop pin rivets 117 which unite the side plates with clearance therebetween for the flange 114. The friction facing carrier also carries a series of spring steel segments 118 around the outer periphery of the side plate 115 and these segments in turn carry two friction facings 119 and 120.

The hub 111 with its inner flange 113 constitutes a first rotatable member, the outer flange constitutes a second rotatable member, and the friction facing carrier with its friction facings constitutes a third rotatable member. The rotatable members of the driven plate are coupled together and are movable angularly with respect to each other about a common axis of rotation. A low friction bearing element 121, in conjunction with axially directed spring loading provided by a belville spring 122 and a circlip 123, provides relative radial location of the side plates 115,116.

Circumferentially directed primary resilient elements constituted by coil springs 124 are arranged in mutually aligned apertures in the outer flange 114 and side plates 115, 116, namely aperture 125 in the outer flange and apertures 126 and 127 in the side plates 115 and 116 respectively.

Side plate 116 incorporates an outward annular step 128 providing an enlarged space between the outer flange 114 and the side plate. Positioned within the space is a control plate 129 which is provided with a lug 130 engaging with the aperture 125 in the outer flange so that the control plate 129 rotates with the outer flange 114. An intermediate plate 131 closely surrounds the hub 111 and is mounted on splines formed on the hub and held in place by a circlip 132. Windows 133 and 134 are provided in the control plate 129 and the intermediate plate 131 respectively and circumferentially directed auxiliary resilient elements constituted by coil springs 135 are arranged in the windows 133, 134. Springs 135 are softer than springs 124. A stepped annular plate 136 is secured to control plate 129 to form a first rotatable member of the damper with an axially polarised annular magnet 137 being located between the annular plate 136 and the control plate 129. Annular plate 136 and control plate 129 are made of a ferromagnetic material such as mild steel.

An outwardly directed annular element 138 comprising a second rotatable member of the damper is carried by hub 111 for rotation therewith and extends outward between the two plates 129, 136 with gaps between adjacent components. Element 138 is splined to the hub 111 and is located axially by a circlip 139. Element 138 is also of ferromagnetic material.

A magnetic fluid is introduced into the gaps between the components 129, 138 and 136, 138 in such quantity as to bridge the gaps. The fluid is held in position by magnetic fields in the gaps arising from the magnet 137 and its associated magnetic circuit.

In use, when a light load or small displacement is applied to the carrier this is transmitted through springs 124 to outer flange 114 and control plate 129, and from control plate 129 through auxiliary springs 135 to intermediate plate 131 and hub 111. Because the springs 135 are much softer than springs 124 there is direct drive without compression of the springs 124 and the initial angular movement occurs between hub 111 and outer flange 114 under the control of auxiliary springs 135. Torsional vibrations under conditions of light loading, such as those which cause idle-rattle, result in vibratory angular displacement between the outer flange and the hub and shear action in the magnetic fluid provides viscous damping between the outer flange and the hub and thereby tends to damp out the vibratory angular displacement between these two members. This is the situation for movement up to 3° in either direction as allowed by the co-operating teeth of the inner and outer flanges. After this movement of 3° in either direction, no further relative rotation can occur between the hub and the outer flange so that further deflection is controlled by the springs 124.

## Claims

1. A torsional vibration damper comprising first and second rotatable members (31, 33) coupled together and movable angularly with respect to each other about a common axis of rotation, a magnetic circuit passing through both members and comprising a gap (34, 35) between the members across which a magnetic field is established, and a viscous magnetic fluid held in the gap by the magnetic field and providing viscous damping of relative angular movement between the members, characterised in that one of the first and second rotatable members (31) is provided with a plurality of castellations (43) protruding from one face thereof at regular intervals around the periphery of the member and extending towards the other of the first and second members, and the other of the first and second members (33) is provided with a plurality of raised ribs (44, 45) extending towards said one member (31), the raised ribs extending in the circumferential direction of the second member, the relative angular positions of the castellations (43) and of the ribs (44, 45) being such that during relative movement between the first and second members which is to be damped, the degree of overlap of the castellations and the ribs varies.

2. A torsional vibration damper as claimed in claim 1, characterised in that the raised ribs (44, 45) are arranged as radially outer ribs (44) and radially inner ribs (45).

3. A clutch driven plate comprising a hub (11), a friction facing carrier mounted on the hub coaxially therewith and capable of limited angular rotation about the hub, and a torsional vibration damper as claimed in claim 1 or 2 acting between the hub and the friction facing carrier.

4. A clutch driven plate comprising a hub (111) incorporating an inner flange (113), an outer flange (114) mounted on the inner flange coaxially therewith and capable of limited angular rotation about the hub, a friction facing carrier mounted on the hub coaxially therewith and capable of limited angular rotation relative to the hub and to the outer flange, and a torsional vibration damper as claimed in claim 1 or 2 acting between the outer flange and the hub.

## Patentansprüche

1. Drehschwingungsdämpfer bestehend aus ersten und zweiten Drehgliedern (31, 33), die miteinander gekoppelt sind und deren Winkellage um eine gemeinsame Drehachse verstellt werden kann, wobei ein Magnetkreis durch beide Glieder strömt und in einem Spalt (34, 35) zwischen den Gliedern ein Magnetfeld bildet, und eine viskose Magnetflüssigkeit durch das Magnetfeld im Spalt gehalten wird und eine Viskositätsdämpfung der Winkelbewegung zwischen den Gliedern erzielt, dadurch gekennzeichnet, daß eins des ersten oder zweiten Drehglieds (31) mit einer Mehrzahl von durchbrochenen Stegen (43) versehen ist, die auf einer Fläche in regelmäßigen Abständen am Umfang des Gliedes hervorstehen und zum anderen des ersten oder zweiten Gliedes gerichtet sind, und daß das andere des ersten oder zweiten Gliedes (33) mit einer Mehrzahl von erhöhten Rippen (44, 45) versehen ist, die zum ersten Glied (31) gerichtet sind, wobei die erhöhten Rippen in Richtung Umfang des zweiten Gliedes hervorstehen, wobei die relative Winkelposition der Stege (43) und der Rippen (44, 45) derart ist, daß die zu dämpfende relative Bewegung zwischen dem ersten und zweiten Glied den Überlappungsgrad von Stegen und Rippen ändert.

2. Drehschwingungsdämpfer nach Anspruch 1, dadurch gekennzeichnet, daß die erhabenen Rippen (44, 45) als Radialaußenrippen (44) und Radialinnenrippen (45) ausgelegt sind.

3. Eine Kupplungsmitnehmerplatte bestehend aus einer Nabe (11), einem koaxial auf der Nabe montierten Reibbelagsträger, der eine begrenzte Winkelbewegung um die Nabe durchführen kann, und ein Drehschwingungsdämpfer nach Anspruch 1 oder 2, der zwischen Nabe und Reibbelagsträger wirkt.

4. Eine Kupplungsmitnehmerplatte bestehend aus einer Nabe (111) mit einem Innenflansch (113), einem Außenflansch (114), der koaxial auf dem Innenflansch montiert ist und eine begrenzte Winkelbewegung um die Nabe durchführen kann, ein koaxial auf der Nabe montierter Reibbelagträger, der eine begrenzte Winkelbewegung relativ zu Nabe und Außenflansch durchführen kann und ein Drehschwingungsdämpfer nach Anspruch 1 oder 2, der zwischen Außenflansch und Nabe wirkt.

**Revendications**

1. Un amortisseur de vibrations de torsion comportant un premier élément rotatif et un second élément rotatif (31, 33) couplés l'un à l'autre et capables d'être déplacés angulairement l'un par rapport à l'autre autour d'un axe de rotation commun, un circuit magnétique passant à travers les deux éléments et comportant un écartement (34, 35) entre les éléments en travers duquel un champ magnétique est établi et un fluide magnétique visqueux maintenu dans l'écartement par le champ magnétique et produisant l'amortissement visqueux du mouvement angulaire relatif entre les éléments, caractérisé par le fait que, du premier élément rotatif et du second élément rotatif, l'un d'eux (31) est muni d'une pluralité de créneaux (43) dépassant d'une de ses faces à intervalles réguliers autour de la périphérie de l'élément et se prolongeant vers l'autre de ce premier élément et de ce deuxième élément, et l'autre de ces éléments premier et second (33) est muni d'une pluralité de nervures surélevées (44, 45) se prolongeant vers ledit premier élément mentionné (31), les nervures se prolongeant dans le sens circonférentiel du second élément, les positions angulaires relatives des créneaux (43) et des nervures (44, 45) étant telles que, pendant le mouvement relatif entre le premier élément et le second élément qui doit être amorti, le degré de chevauchement des nervures et des créneaux varie.

2. Un amortisseur de vibrations de torsion comme revendiqué dans la revendication 1. caractérisé par le fait que les nervures surélevées (44, 45) sont aménagées sous la forme de nervures extérieures radialement (44) et de nervures intérieures radialement (45).

3. Un plateau entraîné d'embrayage comportant un moyeu (11), un support à face de friction monté sur le moyeu coaxialement avec celui-ci et capable d'une rotation angulaire limitée autour du moyeu et un amortisseur de vibrations de torsion comme revendiqué dans la revendication 1 ou 2 agissant entre le moyeu et le support à face de friction.

4. Un plateau entraîné d'embrayage comportant un moyeu (111) comportant une bride intérieure (113), une bride extérieure (114) montée sur la bride intérieure coaxialement avec celle-ci et capable d'une rotation angulaire limitée autour du moyeu, un support à face de friction monté sur le moyeu coaxialement avec celui-ci et capable d'une rotation angulaire limitée par rapport au moyeu et à la bride extérieure et un amortisseur de vibrations de torsion comme revendiqué dans la revendication 1 ou 2 agissant entre la bride extérieure et le moyeu.

FIG. 1.

FIG. 2.

A

35

44

45

A

A

FIG. 3.

44

45

43

FIG.4.

B

31

-43-

-43-

-43-

-43-

-43-

B

FIG.5.

FIG.6.